Europäisches Patentamt

European Patent Office

Office européen des brevets

(19)

(11) Publication number: 0 423 361 A1

## EUROPEAN PATENT APPLICATION
### published in accordance with Art. 158(3) EPC

(21) Application number: 90906335.6

(51) Int. Cl.5: H02K 7/102

(22) Date of filing: 11.04.90

(86) International application number: PCT/JP90/00487

(87) International publication number: WO 90/13168 (01.11.90 90/25)

(30) Priority: 19.04.89 JP 97422/89

(43) Date of publication of application: 24.04.91 Bulletin 91/17

(84) Designated Contracting States: DE FR GB

(71) Applicant: FANUC LTD.
3580, Shibokusa Aza-Komanba, Oshino-mura Minamitsuru-gun, Yamanashi 401-05(JP)

(72) Inventor: SOGABE, Masatoyo, FANUC Mansion harimomi 6-304
1537-1, Shibokusa, Oshinomura Minamitsuru-gun, Yamanashi 401-05(JP)
Inventor: OKUDA, Kanemasa, FANUC Mansion

Harimomi 6-204
3537-1, Shibokusa, Oshino-mura Minamitsuru-gun, Yamanashi 401-05(JP)
Inventor: UCHIDA, Hiroyuki, FANUC Mansion harimomi 7-107
3539-1, Shibokusa, Oshino-mura Minamitsuru-gun, Yamanashi 401-05(JP)
Inventor: NISHINA, Masashi, FANUC Dai-3 Vira-karamatsu
3527-1, Shibokusa, Oshino-mura Minamitsuru-gun, Yamanashi 401-05(JP)

(74) Representative: Jackson, Peter Arthur et al Gill Jennings & Every, 53-64 Chancery Lane London WC2A 1HN(GB)

(54) STRUCTURE OF MOTOR HAVING BUILT-IN ELECTROMAGNETIC BRAKE.

(57) In order to provide an electromagnetic brake (24,26,27,30) in a motor, a brake core (30) must be correctly positioned with respect to the output shaft (10) of the motor. So far, therefore, the bottom surface (18A) of the core housing (18) to which the brake core (20) is secured and the bottom surface (20A) of the brake core (30) have to be machined highly precisely, resulting in an increase in the cost and making it difficult to decrease the size. According to the invention, the brake core (30) and the core housing (28) are formed integrally as one piece by injection-molding plastic material to decrease after-treatments. Thus a compact motor having a built-in electromagnetic brake can be provided.

Fig.1

# STRUCTURE OF MOTOR PROVIDED WITH ELECTRO-MAGNETIC BRAKE

## TECHNICAL FIELD

The present invention relates to a structure of a motor provided with an electro-magnetic brake. More particularly, it relates to a structure of an attachment of a brake core and a housing for a brake area.

## BACKGROUND ART

In general, a housing for a brake area of a motor provided with an electro-magnetic brake is made of an aluminium cast alloy, an aluminium die casting alloy, and so on, and a brake core made of a magnetic metal is fixed to the housing by a bolt or the like.

The inner face of the core-housing to which the brake core is fixed and an outer face of the brake core which abuts against the inner face must be finished with a high accuracy, because the brake core for an electro-magnetic brake must be accurately positioned with respect to an output shaft of the motor. Furthermore, grooves for an O-ring must be machined in the core housing and the brake core, and similar grooves must be formed at a connecting area of the core housing and a housing for a motor body for sealing same.

Such a machining greatly increases the cost of the products, and especially when a thin housing is machined, an accurate machining cannot be obtained because the thin housing is not tough enough to withstand the machining force. A clearance exists between the brake core and the core housing, and thus there is room for a reduction of size, and a zone is also necessary in which a bolt member for an attachment of the brake core to the core housing is disposed. Furthermore, extra process steps are required for the attachment of the brake core and assembly of the O-rings.

## DISCLOSURE OF THE INVENTION

Therefore, an object of the present invention is to reduce the process steps necessary for attaching the brake core to the core housing and those necessary when the assembly is machined and combined to the motor body, and to realize a compact unit, to thus solve the above problems.

In view of the above-mentioned object, there is provided a structure of a motor provided with an electro-magnetic brake characterized in that a core housing to which a brake core of the electro-magnetic brake is fixed and enclosed thereby, and being one element constituting a motor housing, is formed integrally with the brake core by a plastic material.

The core housing is formed integrally with the brake core by an injection molding of a plastic material, so that a machining usually required for a relative positioning of the core housing and the brake core and for attaching the brake core to the core-housing becomes unnecessary, an outer diameter of the core housing can be reduced, and the core housing can be easily machined because the brake core is utilized as a reinforcement for the core housing.

## BRIEF DESCRIPTION OF THE DRAWINGS

Figure 1 is a side view of an electro-magnetic brake according to the present invention;

Figure 2 is a front view taken along the arrow line II of Fig. 1;

Figure 3 is a sectional view showing another embodiment according to the present invention;

Figure 4 is a front view taken along the arrow line IV of Fig. 3;

Figure 5 is a partial sectional view showing an electro-magnetic brake portion according to the present invention, when assembled to a motor body; and

Figure 6 is a sectional view of a motor provided with a prior electro-magnetic brake.

## BEST MODE OF CARRYING OUT THE INVENTION

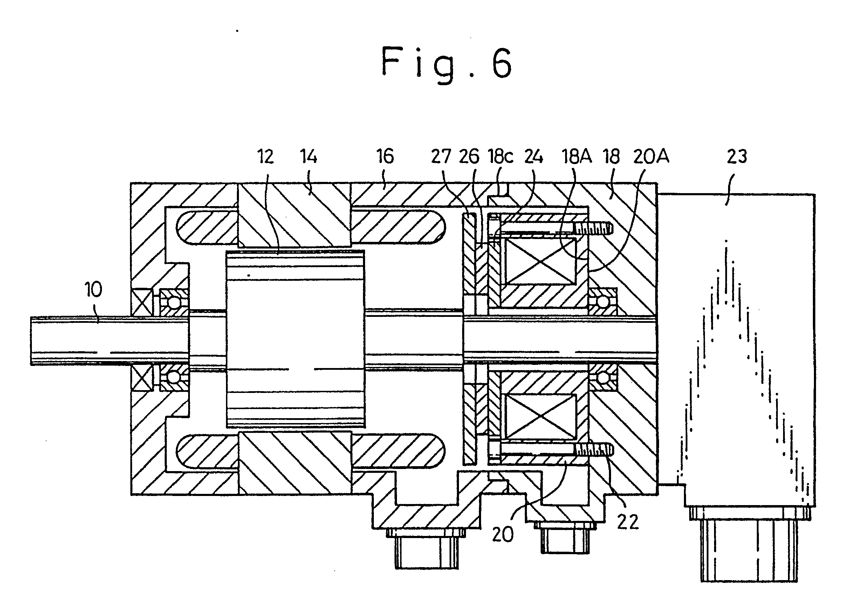

The present invention will be described in detail hereinafter according to the embodiment shown in the attached drawings. Referring to Fig. 6, showing a prior art motor provided with an electro-magnetic brake, a stator 14 is fixed to a housing 16 of a motor body, and an output shaft 10 having a rotor 12 fixed thereto is rotatively supported therein. An electro-magnetic brake is attached to either the front or the rear end of the shaft 10. In this embodiment, it is attached to the rear end.

A bottom face 20A of the brake core 20 must be accurately machined and a bottom face 18A of the core-housing to be attached thereto and to enclose the brake core 20 therein also must be accurately machined, so that the electro-magnetic brake is positioned coaxially with respect to the output shaft 10. A tapping process for a core housing 18 is necessary because the brake core 20 is fixed to the core housing 18 by bolts 22, and an area is required near the outer periphery of the brake core 20, in which area bolts 22 are disposed. Reference numerals 24, 26, or 27 show an armature, an friction plate, or an end plate, as components of the electro-magnetic brake. Reference numeral 23 shows a detector box unit by which a rotation of the output shaft 10 can be detected. Furthermore, an end portion 18C, etc. of the core housing 18 must be accurately machined so that the electro-magnetic brake portion is accurately combined to the motor body when the core housing 18 is connected to a main housing 16.

The basic structure of the following motor is similar to that of the above-mentioned motor, and an electro-magnetic brake portion can be disposed at the front of the motor body, as described above.

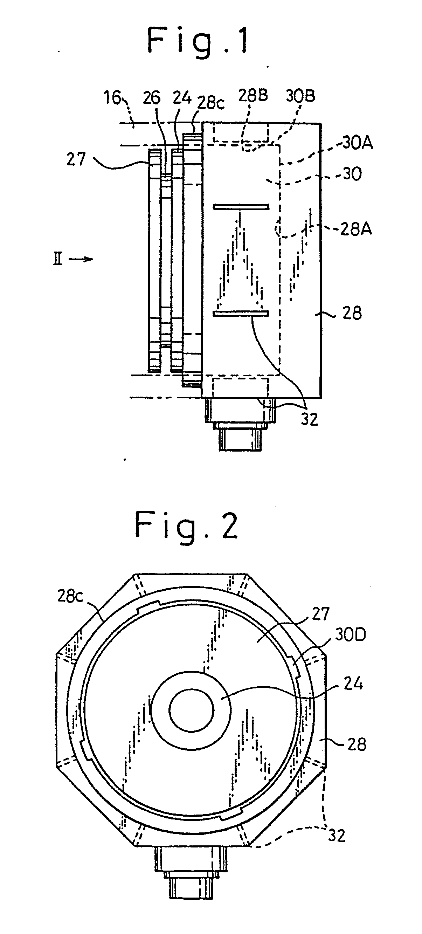

Referring to Figs. 1 and 2, a core housing 28 is integrated with a brake core 30 by injecting a plastic substance to the brake core 30. Because they are integrally formed, the core housing 28 and the brake core 30 are tightly connected without the need for an accurate finishing of outer surfaces 30A, 30B of the brake core 30. Namely, the outer surfaces 30A, 30B of the brake core and inner surfaces 28A, 28B of the core housing 28 need not be finished. Nevertheless, an end portion 28C of the core housing 28, to be connected with a housing 16 of a motor body, must be accurately finished. An attachment force between the core housing 28 and the brake core 30 when they are integrated by an injection molding is large enough to withstand a usual brake force. Projections 30D are also formed at an outer surface of the brake core 30 of this embodiment, to ensure the reliability of the connection. Cracks are occasionally generated in the core housing when a thickness and a width of the core housing formed by an injection molding are large, because of the difference between the coefficients of expansion of a plastic material and a magnetic metal forming the brake core 30. Accordingly, a plurality of slits 32 are formed at the outer surface of the core housing 28 and extended along a central axis of the motor, to prevent these cracks. These slits operate upon the principle of a release of a hoop stress generated due to a difference between the coefficients of expansion of a metal and a plastic, which stress causes the cracks.

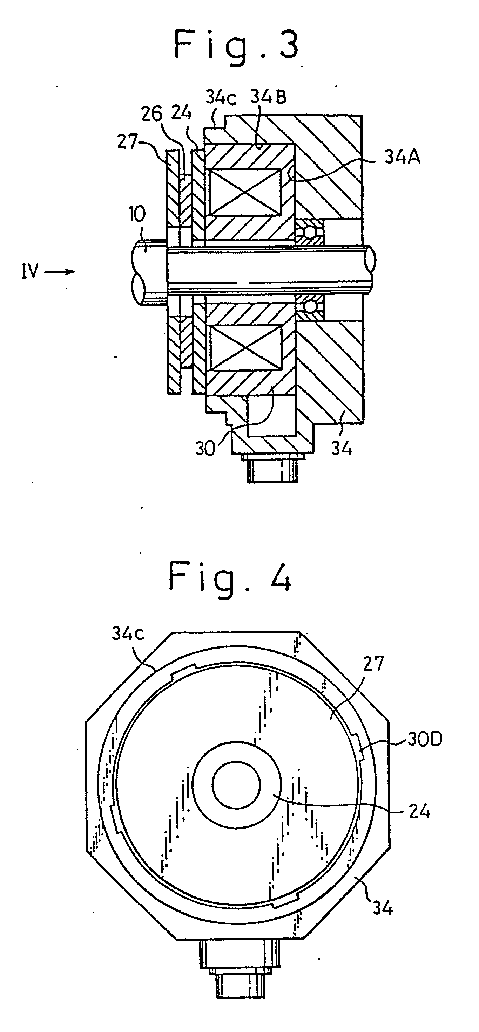

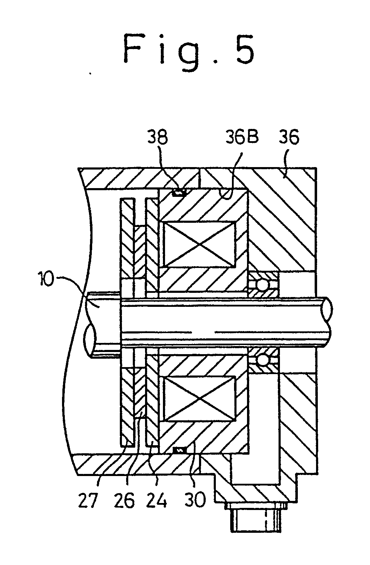

Now, referring to Figs. 3 and 4, another embodiment of an assembly of the brake core 30 and the core housing 34 is shown. This assembly is integrally formed by heating and pressing the brake core 30 and the core housing 34. Namely, inner surfaces 34A and 34B of the core housing 34 of a plastic material are heated until melted to a slight extent, and the brake core 30 is pressed therein to be integrated therewith. Both members can be tightly connected without a special finish machining after each member 30 or 34 is separately formed, because the inner surface of the core housing 34 is melted to be integrated with the brake core 30. An end portion 34C of the core housing 34 must be machined when a motor body is combined with the core housing, as in the embodiment shown in Figs. 1 and 2, and projections 30D are formed as in the embodiment shown in Figs. 1 and 2. It is possible to prevent an invasion of a liquid into a boundary of the brake core and the core housing, but waterproofing measures are not taken for a side in which an armature 24, a friction plate 26, and an end plate 27 are disposed, in the above-mentioned embodiments. These waterproofing measures can be realized by forming a groove for an O-ring at the end portion 28C of the core housing 28 shown in Fig. 1, or at the end portion 34C of the core housing 34 shown in Fig. 3, for an insertion of the O-ring therein. It is impossible to form the groove for an O-ring when the thickness of the end portion 28C or 34C is small, and in this case, the waterproofing can be realized by providing a groove for an O-ring at the brake core 30, for an insertion of an O-ring 38 therein as shown in Fig. 5. An O-ring is not necessary for a contacting region 36B of the core housing 36 and the brake core 30, because this region is sealed during the injection molding, as shown in Figs. 1 and 2, and during the heating and pressing as shown in Figs. 3 and 4.

It is apparent from the foregoing description that a special finishing is not necessary when a brake core is positioned and fixed, according to the present invention, to thereby reduce costs, that the brake portion is compact, and furthermore, that the machining of the core housing is easy because the core housing is reinforced by the brake core.

LIST OF REFERENCE NUMERALS

| | |
|---|---|
| 10 | Output shaft |
| 16 | Main housing of motor |
| 18, 28, 34, 36 | Core housing |
| 20, 30 | Brake core |
| 30D | Projection of brake core |
| 32 | Slit |

**Claims**

1. A structure of a motor provided with an electro-magnetic brake, characterized in that a core housing having a brake core of said electro-magnetic brake fixed thereto and enclosing said brake core, and being one element constituting a motor housing, is formed integrally with the brake core by utilizing a plastic material for the forming thereof.

2. A structure of a motor provided with an electro-magnetic brake according to claim 1, wherein said core housing is formed integrally with said brake core by an injection molding process, and a slit is extended at an outer surface of said core housing along a longitudinal direction of a motor.

3. A structure of a motor provided with an electro-magnetic brake according to claim 1, wherein said brake core is pressed into said core housing while an inner surface of said core housing is heated, whereby the two members are integrated as one unit.

4. A structure of a motor provided with an electro-magnetic brake according to claim 2, wherein a projection is formed at an outer surface of said brake core.

5. A structure of a motor provided with an electro-magnetic brake according to claim 3, wherein a projection is formed at an outer surface of said brake core.

# Fig.1

# Fig.2

# Fig.3

# Fig.4

# Fig. 5

# Fig. 6

EP 0 423 361 A1

# INTERNATIONAL SEARCH REPORT

International Application No PCT/JP90/00487

**I. CLASSIFICATION OF SUBJECT MATTER** (if several classification symbols apply, indicate all) *

According to International Patent Classification (IPC) or to both National Classification and IPC

Int. Cl$^5$ H02K7/102

**II. FIELDS SEARCHED**

| Minimum Documentation Searched [7] | |
|---|---|
| Classification System | Classification Symbols |
| IPC | H02K7/102, 7/106 |

| Documentation Searched other than Minimum Documentation to the Extent that such Documents are Included in the Fields Searched [8] |
|---|
| Jitsuyo Shinan Koho     1926 – 1990 |
| Kokai Jitsuyo Shinan Koho     1971 – 1990 |

**III. DOCUMENTS CONSIDERED TO BE RELEVANT [9]**

| Category * | Citation of Document, [11] with indication, where appropriate, of the relevant passages [12] | Relevant to Claim No. [13] |
|---|---|---|
| X | JP, A, 61-52135 (Fanuc Ltd.), 14 March 1986 (14. 03. 86), Page 2, upper right column (Family: none) | 1 |
| Y | JP, U, 60-144759 (Shinko Electric Co., Ltd.), 26 September 1985 (26. 09. 85), (Family: none) | 1 |
| Y | JP, U, 58-134065 (Fuji Electric Co., Ltd.), 9 September 1983 (09. 09. 83), Figs. 1 to 3, bracket 16 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 25, 1990 (25. 06. 90) | July 9, 1990 (09. 07. 90) |
| International Searching Authority | Signature of Authorized Officer |
| Japanese Patent Office | |

Form PCT ISA-210 (second sheet) (January 1985)